# FASCICULE DE BREVET EUROPEEN

(11) **EP 2 862 241 B1**
(45) Date de publication et mention de la délivrance du brevet: **16.05.2018**
(21) Numéro de dépôt: 13729751.1
(22) Date de dépôt: 19.06.2013
(51) Int. Cl.: H01R 13/648, G06K 7/00

(54) **CONNECTEUR DE CARTE À MÉMOIRE RÉSISTANT AUX DÉCHARGES ÉLECTROSTATIQUES**
VERBINDER FÜR EINE SPEICHERKARTE MIT BESTÄNDIGKEIT GEGENÜBER ELEKTROSTATISCHEN ENTLADUNGEN
CONNECTOR FOR MEMORY CARD RESISTANT TO ELECTROSTATIC DISCHARGES

(30) Priorité: 19.06.2012 FR 1255750
(43) Date de publication de la demande: 22.04.2015
(73) Titulaire: Ingenico Group, 75015 Paris (FR)
(72) Inventeur: PAVAGEAU, Stéphane, F-26600 La Roche De Glun (FR); GARY, Didier, F-26120 Peyrus (FR)
(74) Mandataire: Vidon Brevets & Stratégie
(86) Numéro de dépôt international: PCT/EP2013/062791
(87) Numéro de publication internationale: WO 2013/190006

(56) Documents cités:
- EP-A1- 1 439 616
- FR-A1- 2 761 177
- US-A- 5 889 649
- US-A- 5 892 216
- US-A1- 2009 128 982
- US-B1- 6 231 356
- US-B1- 6 318 632

## Description

### 1 DOMAINE DE L'INVENTION

L'invention se rapporte à un connecteur de carte à mémoire, également appelé connecteur CAM. Un connecteur de carte à mémoire est un dispositif permettant l'insertion d'une carte à mémoire. Un connecteur de carte à mémoire est généralement un élément composant un terminal de lecture de carte à mémoire. Un terminal de lecture de carte à mémoire peut par exemple être un terminal de paiement, mais également un assistant personnel ou encore un terminal de communication tel qu'un téléphone portable ou un Smartphone.

### 2 ART ANTERIEUR

Un connecteur de carte à mémoire est destiné à recevoir une carte à mémoire. Il s'agit par exemple d'une carte à puce, qui peut être une carte de paiement. Les cartes de paiement sont des cartes qui intègrent des moyens d'identification et d'authentification d'un utilisateur afin de permettre la réalisation d'une ou plusieurs actions, comme par exemple un paiement, un retrait d'argent, etc.

Une carte de paiement intègre souvent plusieurs moyens pour permettre cette identification et cette authentification de l'utilisateur. Ainsi une carte de paiement peut comprendre une bande magnétique et une puce. Dernièrement de nouveaux moyens de communication et/ou de paiement ont été intégrés sur les cartes : antennes sans contact, puces plus puissantes, capables de réaliser des traitements particuliers, etc.

Ces nouveaux moyens de communications permettent de nouveaux types d'usage: il s'agit par exemple de paiement sans contact, de traitement d'authentification renforcés, etc. Parallèlement, ces nouvelles cartes présentent de nouveaux inconvénients : ces cartes, dites de nouvelles génération, ont tendance à se charger électriquement de manière beaucoup plus importante que les précédentes. Or les cartes chargées électriquement posent au moins un problème : la charge électrique accumulée dans la carte doit, à un moment ou à un autre, s'évacuer. Dans un scénario fréquent, la carte se décharge au moment où elle est insérée dans le terminal. La décharge dans le terminal introduit deux issues possibles : soit la carte se décharge dans le terminal, soit la charge est conduite sur la puce intégrée sur la carte. Dans le premier cas, le terminal peut être gravement endommagé. Dans le deuxième cas, c'est la carte qui peut être endommagée. Dans tous les cas, la décharge se conduit du potentiel le plus haut vers le plus bas, généralement la masse, et avec des intensités généralement importantes. Si la partie traversée par le courant (puce de la carte, terminal) est sensible à ces intensités, alors ou le terminal, et/ou la carte peuvent être endommagé(s).

Des solutions ont été proposées pour pallier ce problème. Elles sont de plusieurs types : les solutions intégrées et les solutions correctives. Elles reposent sur la même approche : évacuer la charge électrique au moment où la carte est insérée dans le connecteur de carte à mémoire. Il existe également des actions de type correctif qui consistent à disposer de composants électroniques (ou le terminal, ou la carte à puce) plus résistantes aux forts courants.

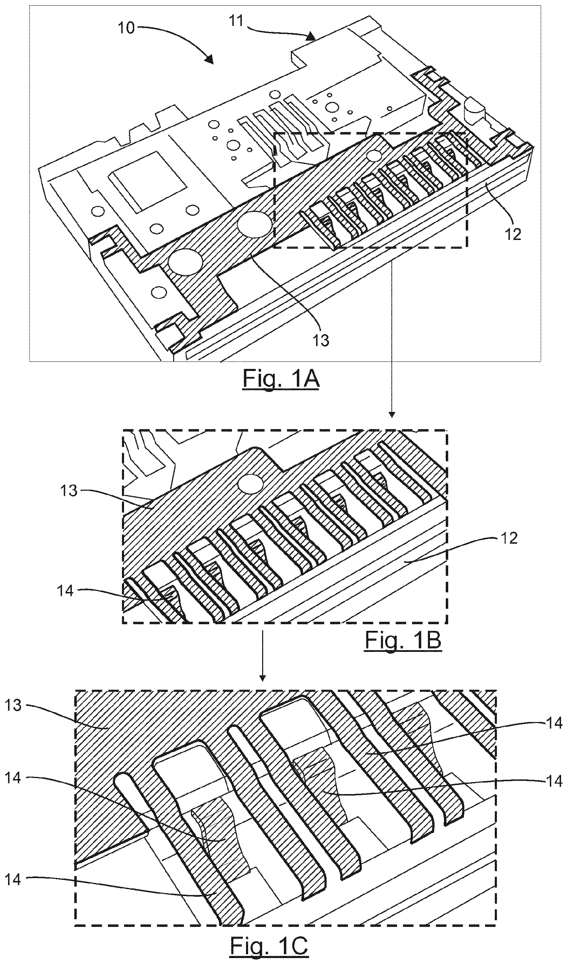

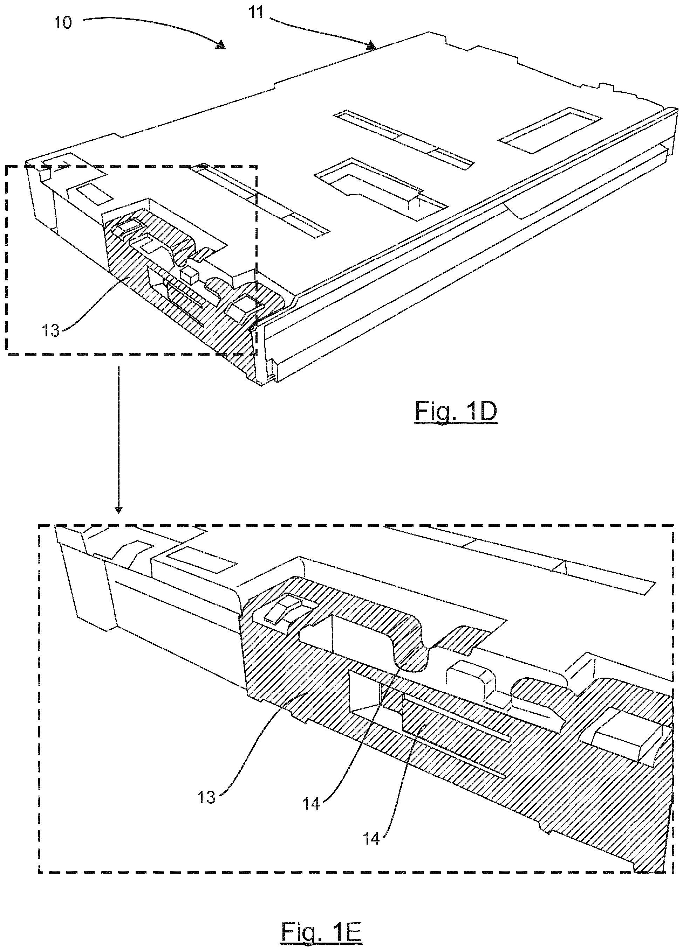

Une solution classique de l'art antérieur est décrite en relation avec les figures 1A, 1B, 1C, 1D et 1E. Ces figures sont des représentations isométriques d'un connecteur de carte à mémoire existant comprenant une solution d'évacuation intégrée. Un connecteur de carte à mémoire 10, comprend une enveloppe 11, une fente d'insertion 12 destinée à recevoir la carte à mémoire. Outre cette enveloppe 11, le connecteur de carte à mémoire comprend une pièce métallique 13, comprenant des ergots 14. Ces ergots 14 sont insérés dans des espaces vides de l'enveloppe 11. Ces ergots métalliques entrent en contact avec la carte au moment de son insertion dans le connecteur de carte à mémoire. Afin que la décharge soit complète, les ergots entrent en contact avec la carte à plusieurs endroits : au niveau de la puce, au niveau de la tranche de la carte et au niveau de la face de la carte ne comprenant pas la puce. Ainsi, au moment de son insertion, la carte est au moins partiellement déchargée. En effet, la pièce métallique 13 est reliée à la masse du terminal et la charge électrique de la carte est évacuée avant que la puce n'entre en contact avec les pins du connecteur de carte à mémoire.

Les solutions correctives fonctionnent selon le même principe : on ajoute à un connecteur de carte à mémoire existant, un ou plusieurs éléments métalliques, reliés à la masse, pour permettre l'évacuation de la charge. Cette opération est d'ailleurs complexe puisqu'elle nécessite de créer plusieurs éléments métalliques en fonction d'un connecteur de carte à mémoire existant. Or la création de tels éléments mécaniques est complexe et onéreuse.

Cependant, bien qu'elles règlent théoriquement le problème de l'évacuation de la charge, ces solutions de l'art antérieur posent encore d'autres problèmes. D'une part, dans le cas de la solution intégrée, la conception du connecteur de carte à mémoire est complexe. Il faut en effet concevoir une première pièce, l'enveloppe, par exemple en plastique injectée, puis adjoindre une pièce métallique sur le pourtour de l'enveloppe. Préalablement, il faut donc avoir formé cette pièce métallique avec de multiples pliages pour que les ergots puissent prendre place dans les espaces vides de l'enveloppe. Cette opération de montage est couteuse

D'autre part, un autre problème, commun aux deux solutions de l'art antérieur, est liée au fait que les ergots métalliques sont susceptibles d'endommager la carte lors de son retrait. En effet, les ergots métalliques sont des pièces abrasives qui frottent la carte avec plus ou moins d'intensité. Or, à force d'être frottée, une carte peut être endommagée.

En résumé, dans les solutions antérieures, le contact se fait avec une résistance relativement faible, et l'ajout d'une résistance en série nécessite beaucoup de place. Cela induit que le courant de la décharge reste important, et peut donc créer des dégâts sur les composants sensibles.

De plus, le contact avec la carte à mémoire se fait de façon ponctuelle, sur des zones définies par la position des ergots. Bien que ces zones soient nombreuses, cela ne permet pas de couvrir l'intégralité des configurations de carte à puce.

Enfin, la solution à base d'une adjonction d'une lame (solution corrective) nécessite l'ajout d'une pièce supplémentaire, laquelle est génératrice de coûts.

Ainsi, les solutions existantes ne sont pas satisfaisantes et il est nécessaire de proposer de nouvelles solutions qui ne présentent pas les inconvénients des solutions de l'art antérieur. US 5 892 216 A divulgue un connecteur de carte à mémoire selon le préambule de la revendication 1.

### 3 RESUME DE L'INVENTION

L'invention ne présente pas ces inconvénients de l'art antérieur. En effet, l'invention se rapporte à un connecteur de carte à mémoire comprenant un module d'insertion de forme globalement parallélépipédique rectangle, ledit module d'insertion comprenant une fente d'insertion de carte à mémoire.

Selon l'invention un tel connecteur comprend en outre plusieurs zones de décharge d'électricité statique entrant en contact avec une portion d'une surface d'une carte à mémoire lors de l'insertion de ladite carte à mémoire dans ledit connecteur de carte à mémoire, chacune desdites zones de décharge d'électricité statique étant constituée au moins en partie par une matière plastique conductrice ayant une valeur de résistance surfacique différente, et lesdits plusieurs zones de décharge étant aménagées de sorte que la décharge de la carte se réalise de façon progressive en plusieurs phases. Ainsi, l'invention permet d'éviter l'adjonction de zones de décharges métalliques qui ont un effet abrasif sur les cartes qui sont insérées dans le connecteur de carte à mémoire.

Selon une caractéristique particulière de l'invention ladite valeur de résistance surfacique prédéterminée est comprise entre 10⁷ Ω/square et 10¹² Ω/square.

Selon une caractéristique particulière de l'invention ladite valeur de résistance surfacique prédéterminée est comprise entre 10⁵ Ω/square et 10⁸ Ω/square

Selon une caractéristique particulière de l'invention ladite valeur de résistance surfacique prédéterminée est de l'ordre de 10⁷ Ω/square.

Selon une caractéristique particulière de l'invention ladite valeur de résistance est de l'ordre de 10⁸ Ω/square.

Selon un mode de réalisation particulier de l'invention, ladite zone de décharge électrostatique est formée par l'intégralité dudit connecteur de carte à mémoire.

Ainsi, l'invention permet d'éviter l'adjonction d'un dispositif complémentaire. Le connecteur de carte à mémoire assure seul la décharge de la carte.

Selon un mode de réalisation particulier de l'invention, ladite zone de décharge électrostatique st une pièce de plastique conducteur disposée au niveau de ladite fente d'insertion, ladite pièce de plastique conducteur comprenant une tige de liaison connectant ladite pièce de plastique conducteur à au moins une connexion à la masse dudit connecteur.

Ainsi, l'invention permet d'adjoindre une zone de décharge qui n'est pas complexe à mettre en oeuvre ou à fabriquer.

### 4 DESSINS

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- les figures 1A, 1B, 1C, 1D et 1E, déjà commentées, illustrent un connecteur et un dispositif de décharge selon l'invention ;
- la figure 2 illustre un mode de réalisation de l'invention.

### 5 DESCRIPTION DE L'INVENTION

### 5.1 Présentation générale

Comme exposé préalablement, le principe général de l'invention est de proposer un connecteur de carte à mémoire qui intègre directement les moyens de décharge des cartes. Plus particulièrement, les moyens de décharge des cartes de l'invention font partie intégrante du connecteur de carte à mémoire de carte, ce qui simplifie grandement la conception de celui-ci et prolonge la durée de vie des cartes insérées.

Il n'est ainsi plus nécessaire d'ajouter des pièces métalliques qui permettent la décharge de la carte. La fabrication du connecteur de carte à mémoire est donc facilitée. Par ailleurs, comme l'usage de pièces métalliques n'est pas nécessaire avec l'invention, il n'y a pas de risques de détériorer la carte lors de son insertion et ou de son retrait. L'intégrité de la carte est donc assurée. De plus, même en cas de mise en oeuvre corrective, l'invention n'oblige pas à une modification importante du connecteur de carte à mémoire. Il est uniquement nécessaire d'adjoindre une pièce en matière plastique conductrice, ce qui est nettement plus simple que l'adjonction d'une lame métallique.

De tels résultats sont rendus possibles, selon l'invention, par l'utilisation d'un plastique semi-conducteur pour concevoir le connecteur de carte à mémoire. Bien entendu, l'apport de l'invention ne se limite pas à l'utilisation d'une matière plastique conductrice. Cependant cette conception, qui a été pensé par les inventeurs, s'est révélée au cours des tests, bien plus efficace qu'attendu. En effet, les utilisateurs estimaient qu'une telle conception ne pourrait répondre au problème de décharge. Or il s'avère que cette conception répond parfaitement au problème et est plus simple que les solutions existantes.

Comme évoqué, afin de réduire les problèmes liés à l'adjonction de parties métalliques sur le connecteur de carte à mémoire, l'invention propose de construire ledit connecteur de carte à mémoire en utilisant un connecteur réalisé au moins en partie en plastique conducteur. Les modes de réalisation de l'invention comportent des caractéristiques qui sont propres à la problématique de décharge solutionnée par l'invention.

En effet, pour permettre une décharge complète de la carte, en fonction du mode de réalisation, il n'est pas suffisant de construire le connecteur de carte à mémoire en partie avec une matière plastique conductrice.

Ainsi, en fonction du mode de réalisation, il est important de définir une valeur de résistance surfacique à la pièce de plastique conductrice. Cette valeur de résistance est exprimée en Ω/square La résistance volumique s'exprime en Ω/m (ou Ω/cm). La résistance de surface (ou surfacique, celle qui est importante pour l'invention) s'exprime en Ω/carré, ou Ω/square. Cette dénomination de la résistance est usuelle pour l'homme du métier.

Elle varie selon que l'intégralité du connecteur de carte à mémoire est conducteur ou que seulement une portion de celui-ci l'est. Par la suite, on présente notamment le cas de deux modes de réalisations. Il est clair cependant que l'invention ne se limite pas à cette application particulière, mais peut également être mise en oeuvre selon de nombreux autres modes de réalisation et plus généralement dans tous les cas où les avantages procurés par l'invention sont intéressants.

### 5.2 Description de modes de réalisation

### 5.2.1 Premier mode de réalisation.

Dans un premier mode de réalisation, le connecteur pour carte à mémoire est équipé d'une pièce spécifique, relativement conductrice, reliée à la masse du terminal. La résistance de cette pièce est relativement faible (de l'ordre de quelques centaines d'ohms). Il s'agit d'une configuration nécessitant peu d'investissement en termes de conception. Il est uniquement nécessaire de construire une pièce venant se fixer au connecteur de carte à mémoire. Cette pièce est reliée à la masse du terminal.

Dans ce premier mode de réalisation, la pièce peut être surmoulée, ou montée a postériori (dans ce second cas, la matière utilisée n'a pas besoin d'avoir une tenue en température très élevée puisqu'elle n'est pas montée en surface du circuit imprimé).

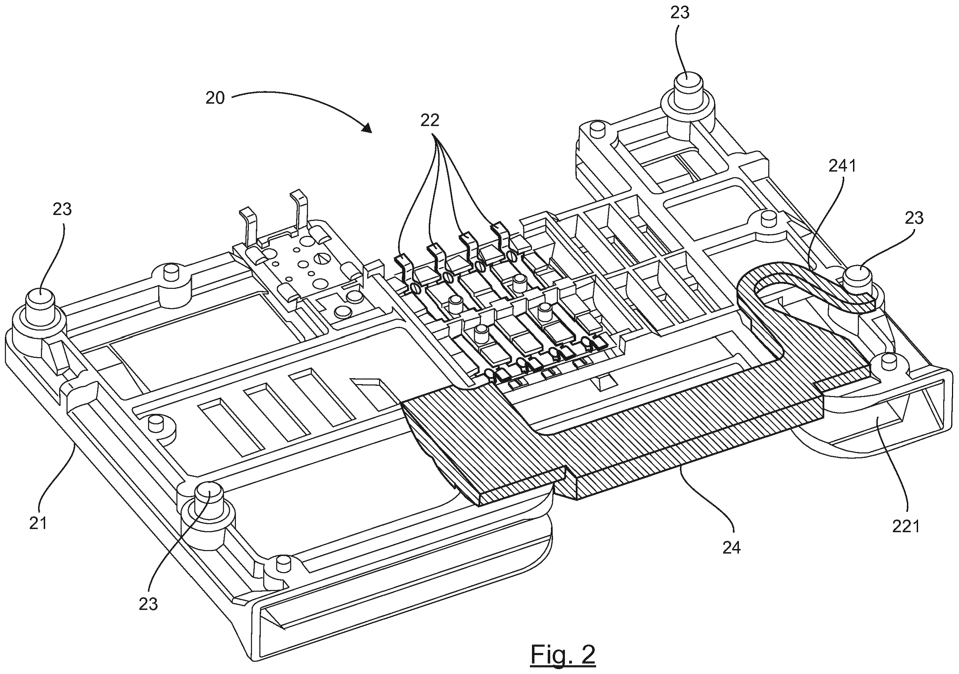

On présente, en relation avec la figure 2, ce premier mode de réalisation d'une portion d'un connecteur pour carte à mémoire selon l'invention.

Le connecteur de carte à mémoire 20 comprend un module d'insertion 21 de forme globalement parallélépipédique rectangle. Ce module d'insertion 21 comprend une fente d'insertion 221 permettant d'insérer la carte. Le connecteur de carte à mémoire 20 comprend également des broches métalliques 22 (également appelées pins). Ces broches métalliques 22 sont positionnées afin d'entrer en contact avec les zones de contact de la puce située sur la carte. Dans ce mode de réalisation, huit broches métalliques sont utilisées. Le connecteur de carte à mémoire 20 comprend également quatre picots 23 destinés à être fixés sur un PCB accueillant le connecteur de carte à mémoire. Dans ce mode de réalisation, ces quatre picots 23 sont également reliés à la masse du terminal (par l'intermédiaire du PCB).

Selon l'invention, dans ce mode de réalisation, le connecteur de carte à mémoire 20 comprend en outre une pièce en plastique conducteur 24, positionnée sur le module d'insertion 21. Cette pièce en plastique conducteur est conformée pour être positionnée à l'entrée de la fente d'insertion 221 pour que la puce de la carte à puce entre en contact avec cette pièce en plastique conducteur 24. Par ailleurs, dans ce mode de réalisation, la pièce en plastique conducteur 24 est conformée afin de ne pas contenir d'arête saillante au niveau de la zone de contact avec la carte pour permettre une insertion en douceur. Ceci permet de ne pas endommager la carte lors de son insertion. La pièce en plastique conducteur 24 comprend en outre une tige de liaison 241. Cette tige de liaison permet de connecter la pièce en plastique conducteur 24 à au moins une connexion à la masse dudit connecteur. Dans le mode de réalisation présenté en figure 2, cette connexion est réalisée sur l'un des quatre picots 23.

Dans ce mode de réalisation, la résistance de la pièce en plastique conducteur 24 est de l'ordre de quelques centaines de milliers d'ohms, voire quelques MΩ. La résistance ne doit pas être trop faible, car il se produirait un court-circuit avec les lames métalliques servant à connecter la carte, ou tout au moins, il y aurait des résistances de fuite entre contacts qui empêcherait de passer les agréments du terminal auprès des organismes officiels (Eurocard Mastercad-VISA, dits EMV). La résistance ne doit pas être trop élevée, car alors le dispositif ne serait pas efficace lors des décharges électrostatiques de quelques kV. D'où cet équilibre : quelques centaines de kΩ entre les contacts.

### 5.2.2 Deuxième mode de réalisation

Dans un deuxième mode de réalisation, c'est le connecteur carte à mémoire qui est complètement réalisé dans une matière conductrice, mais à très faible niveau (résistance surfacique de la matière de l'ordre de 10⁵ à 10⁶ Ω/square)

Que ce soit dans le premier ou dans le deuxième mode de réalisation, on propose de réaliser les pièces dans l'une des matières connues suivantes :
- SABIC Innovative Plastics LNP Stat-kon REP349 PA 66 (1.00e+7 à 1.00e+9 ohm/cm en valeur de résistance volumique)
- SABIC Innovative Plastics LNP Stat-kon LX04420C PEEK (1.00e+6 à 1.00e+8 ohm/cm en valeur de résistance volumique)
- Cool Polymers Coolpoly® D5502 Thermally Conductive Liquid Crystalline Polymer (1.00e+14 ohm/cm 1.00e+14 ohm/cm en valeur de résistance volumique)

Dans le deuxième mode de réalisation, la matière, en plus d'avoir ces caractéristiques électriques, doit résister à la température de refusion et à l'usure de frottement des cartes.

### 5.2.3 Troisième mode de réalisation

Dans ce mode de réalisation, on réalise la décharge avec l'utilisation de plusieurs pièces en plastique conducteur. L'avantage de ce mode de réalisation est de permettre une décharge progressive et non agressive de la carte. Dans ce mode de réalisation, le connecteur de carte à mémoire comprend une pluralité de pièces en plastique conducteur, chaque pièce ne plastique conducteur ayant une résistance surfacique différente.

Dans une mise en oeuvre particulière de ce mode de réalisation, une première pièce, positionnée à l'entrée du connecteur de carte à mémoire, a une résistance surfacique de l'ordre de 10¹² Ω/square. Une seconde pièce, positionnée à l'intérieur du connecteur de carte à mémoire, dispose d'une une résistance surfacique de l'ordre de 10¹⁰ Ω/square. Cette deuxième pièce entre en contact avec la carte postérieurement à la décharge réalisée par la première pièce. Une troisième pièce, positionnée à l'intérieur du connecteur de carte à mémoire, dispose d'une une résistance surfacique de l'ordre de 10⁸ Ω/square. Cette troisième pièce entre en contact avec la carte postérieurement à la décharge réalisée par la deuxième pièce. Enfin, selon une variante, le connecteur dispose, dans une zone située juste devant les contacts du connecteur, d'une lamelle métallique permettant de finir la décharge de la carte (cette lamelle étant mise à la masse).

Ainsi, plutôt que de réaliser une décharge brutale de la carte on réalise une décharge progressive, pouvant être complète, qui est encore moins susceptible de causer des dommages aux circuits imprimés.

Le nombre de phase de décharge peut ainsi s'étendre, selon les charges maximales auxquelles il est nécessaire d'être protégé, et de la fragilité de l'électronique, entre 2 et 5 niveaux.

## Revendications

1. Connecteur de carte à mémoire (20) comprenant un module d'insertion (21) de forme globalement parallélépipédique rectangle, ledit module d'insertion (21) comprenant une fente d'insertion (221) de carte à mémoire et comprenant plusieurs zones de décharge d'électricité statique (24) entrant en contact avec une portion d'une surface d'une carte à mémoire lors de l'insertion de ladite carte à mémoire dans ledit connecteur de carte à mémoire, chacune desdites zones de décharge d'électricité statique (24) étant constituée au moins en partie par une matière plastique conductrice, **caractérisé en ce que** chacune desdites zones de décharge d'électricité statique (24) a une valeur de résistance surfacique différente, et **en ce que** lesdits plusieurs zones de décharge sont aménagées de sorte que la décharge de la carte se réalise de façon progressive en plusieurs phases.

2. Connecteur de carte à mémoire selon la revendication 1, **caractérisé en ce que** ladite valeur de résistance surfacique est comprise entre 10⁷ Ω/square et 10¹² Ω/square.

3. Connecteur de carte à mémoire selon la revendication 1, **caractérisé en ce que** ladite valeur de résistance surfacique est comprise entre 10⁵ Ω/square et 10⁸ Ω/square.

4. Connecteur de carte à mémoire selon la revendication 1, **caractérisé en ce que** ladite valeur de résistance surfacique est de l'ordre de 10⁷ Ω/square.

5. Connecteur de carte à mémoire selon la revendication 1, **caractérisé en ce que** ladite valeur de résistance surfacique est de l'ordre de 10⁸ Ω/square.

6. Connecteur selon la revendication 1, **caractérisé en ce que** lesdites zones de décharge électrostatique sont formées par l'intégralité dudit connecteur de carte à mémoire.

7. Connecteur selon la revendication 1, **caractérisé en ce que** lesdites zones de décharge électrostatique (24) sont des pièces de plastique conducteur disposées au niveau de ladite fente d'insertion (221), lesdites pièces de plastique conducteur comprenant au moins une tige de liaison (241) connectant lesdites pièces de plastique conducteur à au moins une connexion à la masse dudit connecteur.

## Patentansprüche

1. Speicherkartenverbinder (20), umfassend ein Einsteckmodul (21) von allgemein parallelepipedischer Rechteckform, wobei das Einsteckmodul (21) einen Einsteckschlitz (221) für eine Speicherkarte aufweist und mehrere Bereiche zum elektrostatischen Entladen (24) aufweist, die mit einem Teilbereich einer Oberfläche einer Speicherkarte beim Einstecken der Speicherkarte in den Speicherkartenverbinder in Kontakt kommt, wobei jeder der Bereiche zum elektrostatischen Entladen (24) mindestens teilweise aus einem leitfähigen Kunststoff gebildet ist, **dadurch gekennzeichnet, dass** jeder der Bereiche zum elektrostatischen Entladen (24) einen unterschiedlichen Oberflächenwiderstandswert aufweist und dass die mehreren Bereiche zum Entladen derart ausgebildet sind, dass das Entladen der Karte schrittweise in mehreren Phasen durchgeführt wird.

2. Speicherkartenverbinder nach Anspruch 1, **dadurch gekennzeichnet, dass** der Oberflächenwiderstandswert zwischen 10⁷ Ω/Flächenquadrat und 10¹² Ω/Flächenquadrat beträgt.

3. Speicherkartenverbinder nach Anspruch 1, **dadurch gekennzeichnet, dass** der Oberflächenwiderstandswert zwischen 10⁵ Ω/Flächenquadrat und 10⁸ Ω/Flächenquadrat beträgt.

4. Speicherkartenverbinder nach Anspruch 1, **dadurch gekennzeichnet, dass** der Oberflächenwiderstandswert in der Größenordnung von 10⁷ Ω/Flächenquadrat liegt.

5. Speicherkartenverbinder nach Anspruch 1, **dadurch gekennzeichnet, dass** der Oberflächenwiderstandswert in der Größenordnung von 10⁸ Ω/Flächenquadrat liegt.

6. Verbinder nach Anspruch 1, **dadurch gekennzeichnet, dass** die Bereiche zum elektrostatischen Entladen durch die Gesamtheit des Speicherkartenverbinders gebildet sind.

7. Verbinder nach Anspruch 1, **dadurch gekennzeichnet, dass** die Bereiche zum elektrostatischen Entladen (24) leitfähige Kunststoffteile sind, die auf Ebene des Einsteckschlitzes (221) angeordnet sind, wobei die leitfähigen Kunststoffteile mindestens eine Verbindungsstange (241) aufweisen, die die leitfähigen Kunststoffteile mit mindestens einer Masseverbindung des Verbinders verbindet.

## Claims

1. Memory card connector (20) comprising an insertion module (21) of a generally rectangular parallelepiped shape, said insertion module (21) comprising a memory card insertion slot (221) comprising, several zones (24) for discharging static electricity coming into contact with a portion of a surface of a memory card during the insertion of said memory card into said memory card connector, each of said zones (24) for discharging static electricity being constituted at least partly by a conductive plastic material **characterized in that** each of said several zone for discharging (24) having a different value of surface resistance and **in that** said several zone for discharging are configured so that the discharge of the card is realized progressively in several steps.

2. Memory card connector according to claim 1, **characterized in that** said value of surface resistance ranges from 10⁷ Ω/square to 10¹² Ω/square.

3. Memory card connector according to claim 1, **characterized in that** said value of surface resistance ranges from 10⁵ Ω/square to 10⁸ Ω/square.

4. Memory card connector according to claim 1, **characterized in that** said value of surface resistance is of the order of 10⁷ Ω/square.

5. Memory card connector according to claim 1, **characterized in that** said value of surface resistance is of the order of 10⁸ Ω/square.

6. Connector according to claim 1, **characterized in that** said zones for discharging static electricity are formed by the totality of said memory card connector.

7. Connector according to claim 1, **characterized in that** said zones for discharging static electricity (24) are conductive plastic parts placed at said insertion slot (221), said conductive plastic parts comprising at least one linking rod (241) connecting said conductive plastic parts to at least one ground connection of said connector.
